# FASCICULE DE BREVET EUROPEEN

(11) **EP 2 050 988 B1**
(45) Date de publication et mention de la délivrance du brevet: **07.07.2010**
(21) Numéro de dépôt: 08165786.8
(22) Date de dépôt: 02.10.2008
(51) Int. Cl.: F16H 63/30

(54) **Dispositif de freinage d'un arbre moteur d'une boîte de vitesses, pour l'engagement d'un pignon de marche arrière**
Bremsvorrichtung einer Motorwelle in einem Getriebe zum Einrücken eines Rückwärtsgangrads
Device for braking a motor shaft of a gearbox, for engaging a reverse gear

(30) Priorité: 17.10.2007 FR 0758381
(43) Date de publication de la demande: 22.04.2009
(73) Titulaire: Peugeot Citroën Automobiles SA, 78140 Vélizy-Villacoublay (FR)
(72) Inventeur: Ploe, Pierre, 92800 Puteaux (FR)

(56) Documents cités:
- EP-A- 0 501 845
- EP-A- 0 716 252
- DE-A1-102006 015 154
- FR-A- 2 533 009
- FR-A- 2 686 669
- JP-A- 5 118 439
- JP-A- 7 035 235
- JP-A- 62 037 567

## Description

La présente invention concerne un dispositif de freinage d'un arbre moteur d'une boîte de vitesses pour l'engagement d'un pignon de marche arrière, sur une boîte de vitesses à arbres parallèles d'un véhicule automobile.

Les boîtes de vitesses manuelles des véhicules automobiles, comportent un premier arbre moteur lié au moteur du véhicule par un embrayage, et un deuxième arbre parallèle récepteur, lié aux roues motrices du véhicule. Ces arbres peuvent être reliés entre eux par des couples de pignons formant un engrenage transmettant le mouvement de l'un à l'autre suivant différents rapports de démultiplication, correspondant respectivement à autant de rapports de vitesse.

Un des pignons de chaque engrenage est solidaire d'un des arbres, l'autre pignon monté libre en rotation sur l'autre arbre, peut être rendu solidaire de son arbre par le coulissement axial d'un manchon de synchronisation. Ce coulissement réalise d'abord une synchronisation des vitesses des deux éléments par un dispositif de synchronisation comportant des cônes de frottement, puis un crabotage assurant la solidarisation du pignon sur l'arbre.

Chaque manchon de synchronisation peut commander l'engagement d'un rapport disposé axialement d'un côté, ou de deux rapports disposés de part et d'autre.

Pour l'engagement d'un rapport de marche arrière réalisant une inversion du sens de marche de l'arbre récepteur, une disposition connue comporte un arbre intermédiaire supportant un pignon baladeur monté libre en rotation, qui peut être engagé par coulissement axial simultanément sur un pignon porté par un arbre moteur, et sur un autre pignon porté par l'arbre récepteur.

Le pignon baladeur comporte des dentures droites comprenant des faces avant taillées en pointe, pour faciliter l'engagement des dents avec celles des deux autres pignons. Ce dispositif est simple et économique. De plus il est compact, et permet de réduire la longueur de la boîte de vitesses en comparaison avec une boîte comprenant un synchroniseur dédié pour la marche arrière.

Toutefois il nécessite un moyen de freinage de l'arbre moteur, pour dans le cas où celui-ci serait entraîné par sa propre inertie, ou par un couple résiduel appliqué sur le disque d'embrayage, l'amener à une vitesse quasi nulle, avec une différence de vitesse suffisamment réduite pour permettre l'engagement des dents du pignon baladeur sans choc, générant des bruits et de l'usure.

Un dispositif connu pour réaliser ce freinage est décrit notamment dans le document FR-A1-2734879. Il présente un levier de commande d'un rapport de marche arrière, comportant un doigt de commande qui agit sur un basculeur pour faire coulisser axialement le pignon baladeur de marche arrière.

Par ailleurs, la première partie de la course du levier agit sur une fourchette de commande d'un manchon d'engagement d'un rapport de marche avant, par l'intermédiaire d'un cliquet escamotable, pour commencer à activer le synchroniseur de ce rapport. De cette manière, le véhicule étant quasiment à l'arrêt, ce synchroniseur freine l'arbre moteur.

Dans une deuxième partie de la course du levier de commande, il se dégage du cliquet et le manchon de synchronisation rappelé par un ressort, revient dans une position neutre. Le levier de commande continue sa course, et engage ensuite le pignon baladeur sur les pignons moteur et récepteur.

Pour le dégagement du rapport de marche arrière, le cliquet laisse échapper le levier de commande sans activer le dispositif de synchronisation du rapport de marche avant, ce qui évite de générer un effort au levier du à cette synchronisation, en fin de dégagement de la marche arrière.

Un inconvénient principal de ce dispositif est qu'il est complexe et peu économique, le cliquet laissant échapper le levier de commande lors du dégagement de la marche arrière pour réduire l'effort de dégagement du levier, ce qui nécessite plusieurs pièces en mouvement. Le document EP-A1-0 716 252 décrit un dispositif selon le préambule de la revendication indépendante 1.

La présente invention a notamment pour but d'éviter ces inconvénients de la technique antérieure, et de proposer un dispositif de commande de marche arrière comportant un freinage de l'arbre moteur, qui permette de manière simple, de réduire l'effort de dégagement de la marche arrière.

Elle propose à cet effet sur une boîte de vitesses à arbres parallèles, un dispositif de commande d'un rapport de marche arrière, comprenant un basculeur apte à déplacer axialement un pignon baladeur pour l'engager sur deux autres pignons respectivement menant et mené, **caractérisé en ce qu**'il comporte une came liée au basculeur comportant un profil de came fixe, coopérant avec une fourchette de commande d'un manchon de synchronisation d'un rapport de marche avant, cette came comportant une première pente d'engagement du synchroniseur au début du passage du rapport de marche arrière, puis une deuxième pente plus faible que la première, de dégagement du synchroniseur, et enfin une partie neutre laissant le manchon dans une positon de point mort, qui comprend la course d'engagement du pignon baladeur sur les pignons menant et mené.

Un avantage du dispositif de commande du rapport de marche arrière selon l'invention, est qu'il permet lors du dégagement de la marche arrière, d'aborder la partie mettant en oeuvre le synchroniseur avec une pente faible, ce qui réduit de manière simple l'effort au levier de changement de vitesse.

Suivant l'invention, le basculeur est monté pivotant autour d'un axe de pivot lié au carter de la boîte de vitesses.

La came comprend une rainure, globalement en arc de cercle, centrée sur l'axe du pivot du basculeur, apte à coopérer avec un pion lié à la fourchette de commande.

Le dispositif de commande selon l'invention peut en outre comporter une ou plusieurs des caractéristiques suivantes, qui peuvent être combinées entre elles.

Avantageusement, le basculeur est formé dans une plaque de tôle qui comporte une découpe constituant la rainure de came.

Avantageusement, le pion comporte une partie centrale mince qui s'engage dans la rainure de came, et des épaulements latéraux qui restent dans toutes les positions de fonctionnement, en surplomb de part et d'autre de la tôle du basculeur.

Le pion peut être monté tournant sur un axe fixe, lié à la fourchette de commande.

Selon l'invention, le basculeur comporte une masse d'inertie qui se trouve à proximité de la rainure de came.

La masse d'inertie peut être constituée d'un bossage réalisé par la découpe de la tôle formant le basculeur, qui est situé dans le prolongement de la rainure de came.

Selon une variante de l'invention, le bras de came du basculeur comporte une découpe avec un contour fermé, comprenant la rainure de came globalement en arc de cercle, dont l'entrée débouche sur une rainure radiale.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 présente une vue partielle en perspective, des composants internes d'une boîte de vitesses ;
- la figure 2 présente une commande de marche arrière selon l'art antérieur ;
- la figure 3 présente en perspective le dispositif interne de commande d'une boîte de vitesses selon l'invention ;
- la figure 4 présente en vue de détail la came du dispositif interne de commande, pour l'entraînement d'un manchon par un pion fixe ;
- les figures 5 et 6 présentent en variante, un entraînement du manchon par un pion pivotant.

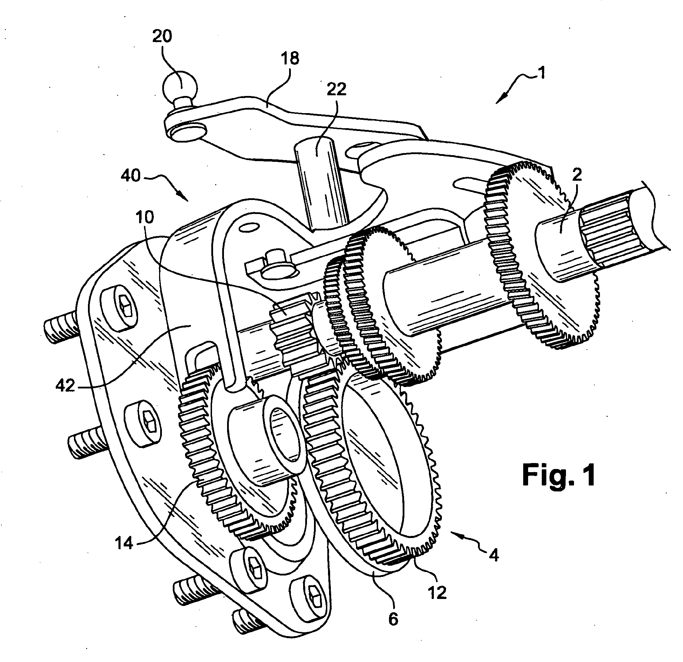

La figure 1 présente une boîte de vitesses 1 comprenant un arbre moteur 2 lié au moteur du véhicule par un embrayage, non représenté, et un arbre récepteur, également non représenté, disposé parallèlement. L'arbre moteur 2 supporte des pignons fixes engrenant avec des pignons fous/libres de l'arbre récepteur, qui peuvent être engagés par des manchons de synchronisation pour réaliser différents rapports de vitesse.

Un manchon de synchronisation 4 est disposé sur l'arbre récepteur, son coulissement axial est commandé par le déplacement d'une fourchette non visible, qui comporte des doigts engagés dans une rainure circulaire 6 de ce manchon 4.

L'arbre moteur 2 comporte un pignon menant à denture droite 10, axialement aligné avec un autre pignon mené 12 à denture droite, porté par le manchon de synchronisation 4. Un pignon baladeur 14 à denture droite aussi, monté libre en rotation sur un arbre parallèle non représenté, peut coulisser axialement pour venir engager sa denture sur celles des deux autres pignons, de manière à pouvoir transférer le couple du pignon menant 10 au pignon mené 12, en passant par le pignon baladeur.

La face avant des dentures du pignon baladeur 14, est taillée en pointe pour faciliter l'engagement des dents avec celles des deux pignons menant 10 et mené 12.

Le mouvement de translation du pignon baladeur 14 est commandé par un basculeur de marche arrière 40, réalisé dans une tôle découpée et mise en forme, qui est monté sur un pivot lié au carter de la boîte de vitesses. Ce basculeur 40 comporte un long bras cintré de passage 42, qui se termine par une fourchette ajustée sur les flancs du pignon baladeur 14, de manière à lier le coulissement de ce pignon au pivotement du basculeur.

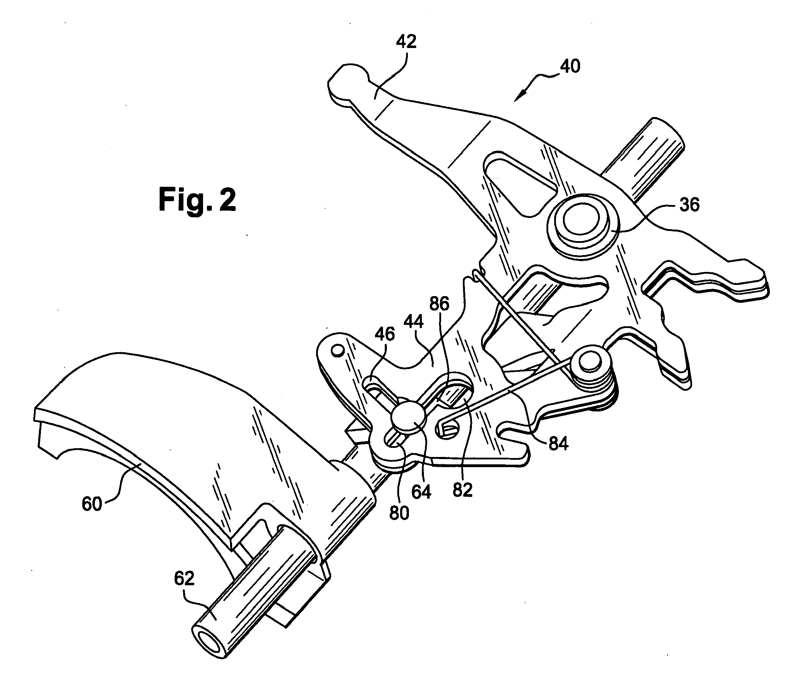

La figure 2 présente une commande de marche arrière selon l'art antérieur, qui diffère de celle présentée figure 1. Le basculeur de marche arrière 40 découpé dans une tôle, comprend un bras de passage 42 qui est sensiblement plat, et un bras de came 44 comportant une découpe de la tôle réalisant une ouverture au contour fermé, qui a globalement la forme d'un T.

La découpe de la tôle comprend une rainure de came 46, globalement cintrée en arc de cercle centré sur le pivot 36 du basculeur 40, et une rainure radiale 80 s'étendant parallèlement à un axe 62 supportant une fourchette 60 de commande d'un rapport de marche avant. La rainure radiale 80 comprend une partie droite sensiblement centrée sur l'entrée de la rainure de came cintrée 46, cette partie droite se terminant à l'extrémité radialement intérieure par une ouverture circulaire 82.

Un pion 64 fixé sur l'axe de fourchette 62 perpendiculairement à la tôle du bras de came 44, comprend une partie centrale mince bordée de chaque côté par deux épaulements d'un plus grand diamètre. L'ouverture circulaire 82 de la rainure radiale 80, permet au montage l'engagement de l'épaulement supérieur du pion 64.

La partie centrale mince du pion 64 peut librement coulisser dans la rainure radiale 80, lors des changements de vitesse réalisés par la fourchette 60. Pour un passage de la marche arrière, la fourchette 60 se trouvant dans une position de point mort, le pion 64 est en face de l'entrée de la rainure de came 46, et peut s'y engager.

Une came escamotable 86 est posée à plat sous le bras de came 44, elle est formée par une tôle découpée et liée par un pivot au bras de came. Un ressort 84 exerce une force de rappel constante sur cette came escamotable. Lors d'un passage de marche arrière le pion 64 et la fourchette 60 qui lui est liée, se déplace radialement en fonction des pentes fournies à la fois par la rainure de came 46, et par la came escamotable 86.

La came escamotable 86 comporte un profil de came comprenant au début, une première pente 50 qui éloigne radialement le pion 64 de l'axe de pivotement 36, pour commencer un engagement du synchroniseur par la fourchette 60. Puis l'engagement de la marche arrière se poursuivant, une pente sur la partie radialement extérieure de la rainure de came 46, rappel le pion 64 radialement vers l'intérieur pour dégager le synchroniseur. En fin d'engagement de la marche arrière, le pignon baladeur s'engageant sur les pignons menant et mené, le pion 64 avance dans une partie circonférentielle de la rainure de came 46 qui laisse la fourchette 60 en position de point mort.

Lors du dégagement de la marche arrière, le pion 64 recule dans la rainure de came 46, et en même temps le ressort de rappel 84 de la came escamotable 86, laisse cette came s'escamoter de manière à dégager le profil comportant les pentes, pour ne pas engager le synchroniseur. Il n'y a pas alors d'effort supplémentaire au levier de vitesses, du à la synchronisation pendant le dégagement de la marche arrière.

Par ailleurs l'ouverture du bras de came 44 pour le pion 64 ayant un contour fermé, les épaulements du pion fournissent constamment un maintien latéral du bras de came 44, ce qui réalise un bon guidage du basculeur 40 et évite des vibrations.

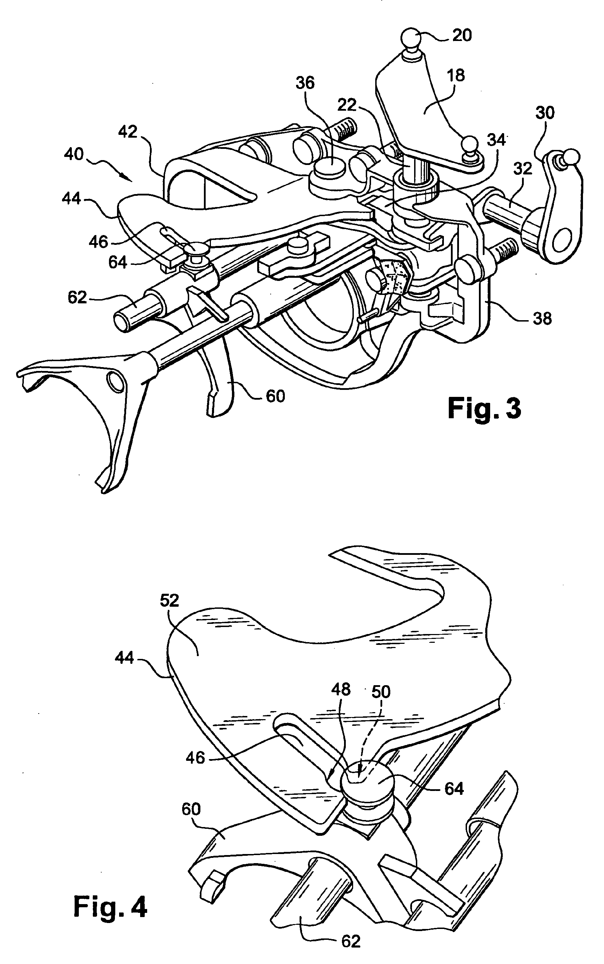

Les figures 3 et 4 présentent un support 38 fixé à l'intérieur des carters de la boîte de vitesses, supportant l'ensemble du dispositif de commande interne. Un axe de passage 22 disposé verticalement, reçoit à son extrémité supérieure sortant de la boîte de vitesses, un bras de commande 18 comportant une rotule 20 qui est reliée au mouvement de passage du levier de changement de vitesses, actionné par le conducteur.

Pour la description de l'ensemble des figures, l'axe de passage 22 est considéré comme étant toujours disposé verticalement suivant la représentation de la figure 3, alors que dans le véhicule il pourrait avoir une autre inclinaison.

Un axe de sélection 32 disposé horizontalement, reçoit à son extrémité extérieure sortant de la boîte de vitesses, un bras de commande 30 comportant une rotule reliée au mouvement de passage du levier de changement de vitesses, et à son extrémité intérieure, un bras de sélection faisant coulisser verticalement une clé d'interverrouillage, qui contient un doigt de passage 34 lié en rotation à l'axe de passage 22.

Le doigt de passage 34 est mis ainsi successivement à la hauteur de moyens d'entraînement de différents axes de fourchettes, appelés aussi noix de fourchettes, qui sont superposés. La clé d'interverrouillage comporte des formes qui après la sélection d'une noix de fourchette, empêchent un mouvement accidentel des autres noix par un pivotement du doigt de passage 34 qui serait mal positionné en hauteur, pour éviter un passage simultané de deux rapports.

Après sélection et pour un passage de la marche arrière, le doigt de passage 34 se trouvant à la hauteur de la noix de fourchette du cinquième rapport, déplace cette noix dans le sens opposé à celui d'un passage de ce cinquième rapport. La noix de fourchette transmet son mouvement au basculeur de marche arrière 40 pivotant, par un pion fixé dessus.

Le basculeur de marche arrière 40 comporte dans un plan sensiblement horizontal, en plus de la première partie du bras de passage 42, un deuxième bras de came 44 comprenant près de son extrémité radialement extérieure, une rainure 46 réalisée par découpe de la tôle, qui forme globalement un arc de cercle centré sur l'axe du pivot 36. Cette rainure 46 de largeur constante, définit un profil de came comprenant à son entrée, après des chanfreins d'entrée, une première pente 50 qui s'éloigne radialement de l'axe de pivotement 36, puis une deuxième pente plus faible que la première, qui se rapproche de cet axe, pour finir par une partie plus longue orientée circonférentiellement.

La rainure de came 46 reçoit de manière ajustée, un pion 64 fixé suivant un axe perpendiculaire au plan de la tôle, sur une fourchette 60 supportée par un axe 62 actionnant un manchon de passage des troisième et quatrième rapports.

Le pion 64 comporte une partie centrale mince qui s'engage dans la rainure de came 46, et des épaulements latéraux venant en surplomb de part et d'autre de la tôle. Ces épaulements sont suffisamment larges pour encadrer dans toutes les positions de fonctionnement, la tôle du bras de came, même en dehors de la rainure de came 46, pendant les débattements radiaux de l'axe de fourchette 62. De cette manière, la tôle est toujours guidée latéralement.

Le fonctionnement du dispositif de passage de la marche arrière est le suivant. Le rapport de marche arrière n'étant pas engagé, le pion 64 se trouve en regard de l'entrée de la rainure de came 46, la fourchette 60 de passage des troisième et quatrième rapports peut librement coulisser pour passer ces rapports, la came n'interférant pas dans ce mouvement.

Au début du passage de la marche arrière, la fourchette 60 étant dans une position de point mort, le basculeur 40 pivote et engage le pion 64 dans la rainure 46. La première pente plus forte 50 déplace radialement vers l'extérieur la fourchette 60, pour commencer une synchronisation du rapport de quatrième qui, le véhicule étant pratiquement à l'arrêt, freine l'arbre moteur 2.

Puis le levier de vitesse continuant sa course d'engagement, le pion 64 arrive sur une deuxième pente plus faible 48 que la première pente 50, qui se trouve radialement à l'extérieur de la rainure de came 46, la fourchette 60 revient en arrière dans une position de point mort. Enfin, le levier termine sa course, le pion pénètre au fond de la rainure 46 sans déplacer la fourchette 60. Le bras de passage 42 engage le pignon baladeur 14 sur le pignon menant 10 qui a été freiné, et sur le pignon mené 12 qui est pratiquement à l'arrêt, pour passer la marche arrière sans choc ni bruit.

La deuxième pente 48 est plus faible que la première 50, ce'qui permet de réduire l'effort sur le levier de vitesses lors du dégagement du rapport de marche arrière, la came décrivant un mouvement en sens inverse.

On réalise ainsi par ce dispositif de came, une course bien définie d'un manchon de passage d'un rapport de marche avant, et qui se produit de manière parfaitement synchronisée, juste avant l'engagement de la marche arrière.

Selon une autre caractéristique de l'invention, le bras de came 44 comporte dans le prolongement arrière de la rainure 46, un bossage arrière 52 réalisé par la découpe de la tôle, constituant une masse d'inertie qui est éloignée de l'axe de pivotement 36 du basculeur de marche arrière 40.

En variante, cette masse d'inertie pourrait être rapportée et fixée par différents moyens, comme une soudure ou un sertissage.

La masse d'inertie 52 procure au basculeur 40 de manière économique, un moment d'inertie important, qui lui permet lorsque la came vient avec un certain élan sur le pion 64, que ce soit lors de l'engagement ou du dégagement de la marche arrière, d'aider à franchir les pentes 48, 50 dans un sens ou dans l'autre. Ce rapport peut ainsi s'engager ou se dégager en douceur, avec un effort contenu.

En particulier la faible pente 48 de retour du pion 64, et la masse d'inertie 52, se combinent pour apporter une plus grande douceur au retour du levier de vitesse vers le point mort.

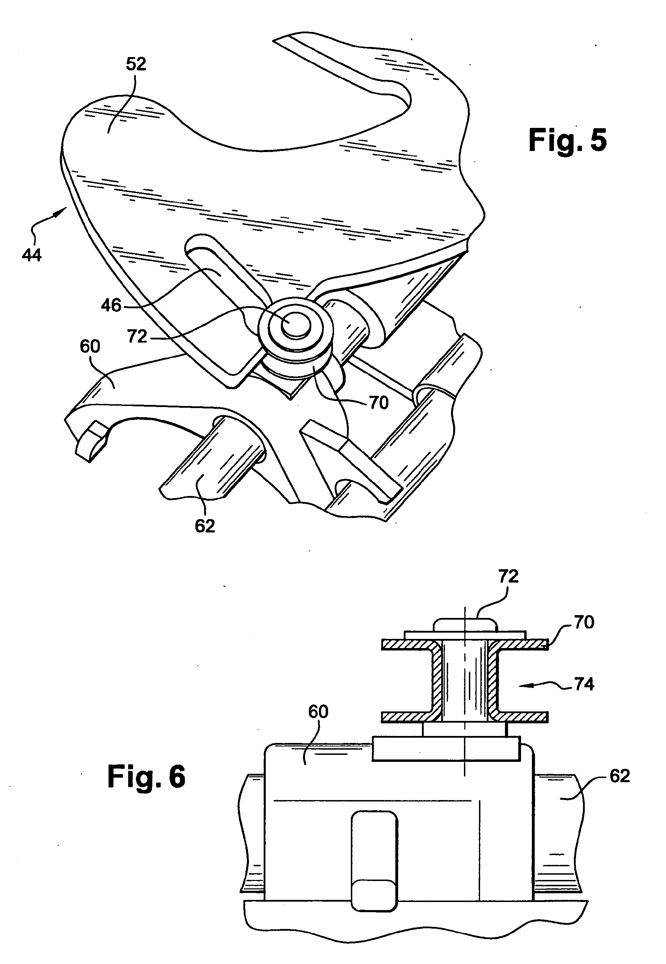

Les figures 5 et 6 présentent un pion tournant 70 positionné de manière similaire au pion précédent 64, mais qui est monté sur un axe 72 fixé sur la fourchette 60. L'axe 72 se termine à son extrémité libre par une rondelle de frottement, et un bourrelet pour le blocage axial du pion tournant 70.

Le pion tournant 70 comporte une gorge circulaire 74 bordée axialement par deux épaulements de grand diamètre, qui réalisent un maintien latéral du bras de came 44 une fois le pion engagé dans la rainure 46. On réalise ainsi avec le pion tournant 70 une réduction des frottements du pion sur le profil de la came, ce qui diminue les efforts et l'usure.

D'une manière générale on peut, pour la commande suivant l'invention, choisir le synchroniseur d'un des rapports de marche avant. Dans cet exemple, la commande de marche arrière étant liée à celle du cinquième rapport qui est sur un même couloir de passage, on ne peut pas l'utiliser. Le pignon mené 12 étant fixé sur le manchon de commande 4 du premier et deuxième rapport, on ne peut pas les utiliser non plus. On a choisit d'utiliser le synchroniseur du quatrième rapport.

La boîte de vitesses 1 peut être robotisée, comportant des actionneurs pilotés par un calculateur électronique qui réalisent les changements de rapports.

## Revendications

1. Dispositif de commande d'un rapport de marche arrière sur une boîte de vitesses à arbres parallèles (1), comprenant un basculeur (40) monté pivotant autour d'un axe d'un pivot (36) lié au carter de la boîte de vitesses et apte à déplacer axialement un pignon baladeur (14) pour l'engager sur deux autres pignons respectivement menant (10) et mené (12), et comprenant une came (46) liée au basculeur, comportant un profil de came fixe, coopérant avec une fourchette de commande (60) d'un manchon de synchronisation d'un rapport de marche avant, cette came comportant une première pente (50) d'engagement du synchroniseur au début du passage du rapport de marche arrière, puis une deuxième pente (48) plus faible que la première, de dégagement du synchroniseur, et enfin une partie neutre laissant le manchon dans une positon de point mort, qui comprend la course d'engagement du pignon baladeur sur les pignons menant et mené, ladite came comprenant en outre une rainure (46), globalement en arc de cercle, centrée sur l'axe du pivot (36) du basculeur (40), apte à coopérer avec un pion (64, 70) lié à la fourchette de commande (60), **caractérisé en ce que** le basculeur (40) comporte une masse d'inertie (52) qui se trouve à proximité de la rainure de came (46).

2. Dispositif de commande d'un rapport de marche arrière selon la revendication 1, **caractérisé en ce que** le basculeur (40) est formé dans une plaque de tôle qui comporte une découpe constituant la rainure de came (46).

3. Dispositif de commande d'un rapport de marche arrière selon la revendication 2, **caractérisé en ce que** la masse d'inertie (52) est constituée d'un bossage réalisé par la découpe de la tôle formant le basculeur (40), qui est situé dans le prolongement de la rainure de came (46).

4. Dispositif de commande d'un rapport de marche selon la revendication 3, **caractérisé en ce que** le pion (64, 70) comporte une partie centrale mince (74) qui s'engage dans la rainure de came (46), et des épaulements latéraux qui restent dans toutes les positions de fonctionnement, en surplomb de part et d'autre de la tôle du basculeur.

5. Dispositif de commande d'un rapport de marche arrière suivant l'une des revendications précédentes, **caractérisé en ce que** le pion (70) est monté tournant sur un axe fixe (72), lié à la fourchette de commande (60).

6. Dispositif de commande d'un rapport de marche arrière suivant l'une des revendications précédentes, **caractérisé en ce que** le basculeur (40) comporte une découpe avec un contour fermé, comprenant la rainure de came globalement en arc de cercle (46) dont l'entrée débouche sur une rainure radiale (80).

## Claims

1. Device for controlling a reverse gear on a gearbox with parallel shafts (1) comprising a rocker (40) pivotably mounted about an axis of a pivot (36) connected to the gearbox housing and capable of moving axially a slide pinion (14) for engaging it with two other respectively driving (10) and driven (12) pinions, and comprising a cam (46) connected to the rocker, comprising a fixed cam profile cooperating with a fork (60) for controlling a synchronizing sleeve of a forward gear, this cam comprising a first slope (50) for engagement of a synchronizer at the start of the shift of the reverse gear, then a second slope (48) which is less steep than the first, for disengagement of the synchronizer, and finally a neutral part leaving the sleeve in a neutral position, which comprises the engagement travel of the sliding pinion on the driving and driven pinions, the said cam additionally comprising a groove (46), generally of circular arc shape, centred on the axis of the pivot (36) of the rocker (40) and capable of cooperating with a pin (64, 70) connected to the control fork (60), **characterized in that** the rocker (40) comprises an inertia mass (52) which is situated in the vicinity of the cam groove (46).

2. Device for controlling a reverse gear according to Claim 1, **characterized in that** the rocker (40) is formed from a sheet metal plate which comprises a cutout constituting the cam groove (46).

3. Device for controlling a reverse gear ratio according to Claim 2, **characterized in that** the inertia mass (52) consists of a boss produced by cutting the sheet metal forming the rocker (40), which is situated in the continuation of the cam groove (46).

4. Device for controlling a reverse gear according to Claim 3, **characterized in that** the pin (64, 70) comprises a pin central part (74) which engages in the cam groove (46), and lateral shoulders which in all the operating positions remain overhanging the sheet metal of the rocker on both sides.

5. Device for controlling a reverse gear according to one of the preceding claims, **characterized in that** the pin (70) is rotatably mounted on a fixed shaft (72) connected to the control fork (60).

6. Device for controlling a reverse gear according to one of the preceding claims, **characterized in that** the rocker (40) comprises a cutout with a closed contour, comprising the generally circular arc-shaped cam groove (46) of which the inlet opens onto a radial groove (80).

## Patentansprüche

1. Vorrichtung zum Steuern eines Rückwärtsgang-Übersetzungsverhältnisses in einem Getriebe (1) mit parallelen Wellen, mit einer Kippeinrichtung (40), die schwenkbar um eine Achse eines Drehzapfens (36) angebracht ist, der mit dem Gehäuse des Getriebes verbunden ist und ein Schieberad-Ritzel (14) axial verlagern kann, um es mit zwei anderen Ritzeln, nämlich einem führenden Ritzel (10) bzw. einem geführten Ritzel (12), in Eingriff zu bringen, und mit einem Nocken (46), der mit der Kippeinrichtung verbunden ist und ein festes Nockenprofil aufweist, das mit einer Steuergabel (60) einer Muffe für die Synchronisation eines Vorwärtsgang-Übersetzungsverhältnisses zusammenwirkt, wobei dieser Nocken eine erste Steigung (50) für den Eingriff mit dem Synchronisierer am Beginn des Übergangs vom Rückwärtsgang-Übersetzungsverhältnis, dann eine zweite Steigung (48), die geringer ist als die Erste, für die Lösung des Eingriffs des Synchronisierers, und schließlich einen neutralen Abschnitt, der die Muffe in einer Totpunktposition lässt und die Eingriffbahn des Schieberad-Ritzels an dem führenden Ritzel und dem geführten Ritzel enthält, aufweist, wobei der Nocken außerdem eine Rille (46) enthält, die im Allgemeinen die Form eines Kreisbogens hat, der auf die Schwenkachse (46) der Kippeinrichtung (40) zentriert ist und mit einem Ansatz (64, 70) zusammenwirken kann, der mit der Steuergabel (60) verbunden ist, **dadurch gekennzeichnet, dass** die Kippeinrichtung (40) eine träge Masse (52) aufweist, die sich in der Nähe der Nockenrille (46) befindet.

2. Vorrichtung für die Steuerung eines Rückwärtsgang-Übersetzungsverhältnisses nach Anspruch 1, **dadurch gekennzeichnet, dass** die Kippeinrichtung (40) in einer Blechplatte gebildet ist, die einen Ausschnitt aufweist, der die Nockenrille (46) bildet.

3. Vorrichtung für die Steuerung eines Rückwärtsgang-Übersetzungsverhältnisses nach Anspruch 2, **dadurch gekennzeichnet, dass** die träge Masse (52) aus einem Höcker gebildet ist, der durch Ausschneiden des die Kippeinrichtung (40) bildenden Blechs verwirklicht ist und sich in der Verlängerung der Nockenrille (46) befindet.

4. Vorrichtung für die Steuerung eines Rückwärtsgang-Übersetzungsverhältnisses nach Anspruch 3, **dadurch gekennzeichnet, dass** der Ansatz (64, 70) einen dünnen mittleren Teil (74), der mit der Nockenrille (46) in Eingriff ist, und seitliche Schultern, die in allen Betriebspositionen beiderseits des Blechs der Kippeinrichtung vorstehend bleiben, enthält.

5. Vorrichtung für die Steuerung eines Rückwärtsgang-Übersetzungsverhältnisses nach einem der vorhergehenden Ansprüche, **dadurch gekennzeichnet, dass** der Ansatz (70) an einer mit der Steuergabel (60) verbundenen festen Achse (72) drehbar montiert ist.

6. Vorrichtung für die Steuerung eines Rückwärtsgang-Übersetzungsverhältnisses nach einem der vorhergehenden Ansprüche, **dadurch gekennzeichnet, dass** die Kippeinrichtung (40) einen Ausschnitt mit einem geschlossenen Umriss aufweist, der die im Allgemeinen kreisbogenförmige Nockenrille (46) aufweist, deren Eingang in eine radiale Rille (80) mündet.
